# EUROPEAN PATENT APPLICATION

(11) **EP 1 437 727 A2**
(43) Date of publication of application: **14.07.2004**
(21) Application number: 03257572.2
(22) Date of filing: 02.12.2003
(51) Int. Cl.: G11B 15/32, G11B 15/28, G11B 33/14

(54) **Tape deck**

(30) Priority: 30.12.2002 KR 2002086850; 05.02.2003 KR 2003007274
(71) Applicant: Samsung Electronics Co., Ltd., Suwon-si, Gyeonggi-do 442-742 (KR)
(72) Inventor: Kim, Bong-joo, Suwon-city, Gyunggi-do (KR); Choi, Hyeong-seok, c/o 250-1404, Hwanggol-maeul, Suwon-city, Gyunggi-do (KR); Seo, Jae-Kab, c/o 601-902, Yuwon Apartment, Suwon-city, Gyunggi-do (KR)
(74) Representative: Geary, Stuart Lloyd

(57) **Abstract**

An oil spatter prevention apparatus having a shaft for use with a device, such as a tape recorder, including a stationary portion fixed to a deck, a shaft body extended from the stationary portion on which a rotation body is rotatably supported on an outer circumference, and an oil spattering prevention means for preventing oil applied between the shaft body and the rotation body from being spattered when the shaft body rotates, the oil spatter prevention means being at least one of a circumferential recess on the shaft body, an annular recess on the shaft stationary portion, and a recess exterior and adjacent to the shaft.

## Description

The present invention relates to a tape deck having a shaft.

The term "tape recorder" as used herein includes VCRs (video cassette recorders), camcorders and devices having only a playback function but is not limited thereto.

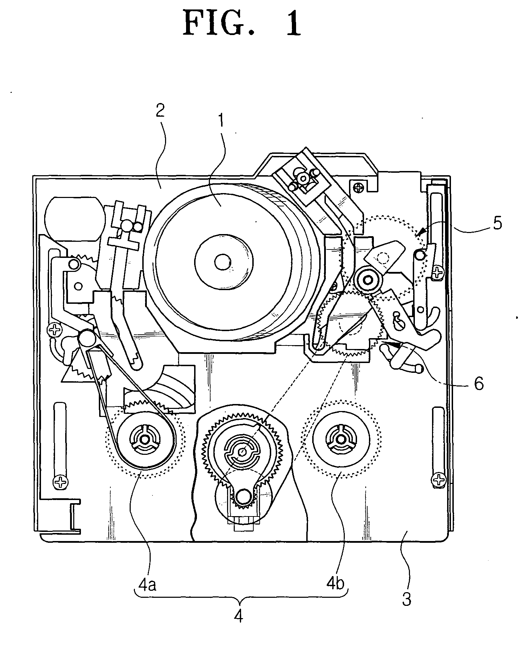

Referring to Figure 1, a conventional tape recorder comprises a main deck 2 on which a head drum 1 is rotatably disposed, a sub deck 3 disposed on the main deck 2 for movement between loaded and unloaded positions, a reel apparatus 4 rotatably disposed on the sub deck 3 for driving the tape reels of a tape cassette and a power transmission unit 6 for selectively transmitting power from a capstan motor assembly 5, provided on the main deck 2, to the reel apparatus 4.

The reel apparatus 4 is divided into a supply side reel assembly 4a from which tape is drawn during recording and playback and a take-up side reel assembly 4b onto which tape is wound during recording and playback.

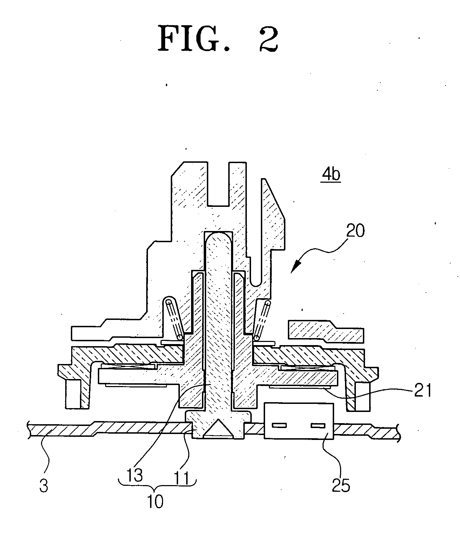

Figure 2 shows an example of a reel assembly 4b which comprises a shaft 10, fixed to the sub deck 3, and a reel body 20 rotatably disposed on the shaft 10. The shaft 10 comprises a foot portion 11, fixed on the sub deck 3, and a finger 13, having a reduced outside diameter, extending from the foot portion 11. The reel body 20 may take various forms as is well-known to those skilled in the art.

The reel body 20 is rotatably supported on the finger 13. For smooth rotation of the reel body 20, oil is applied between the finger 13 and the reel body 20. However, oil running down the finger 13 may be spattered during the high-speed rotation of the reel body 20. As a result, surrounding parts of the deck are contaminated with oil causing malfunctioning. For example, if a sensible portion 21, provided on the bottom of the reel body 20, and a sensor 25 for detecting the sensible portion 21 are contaminated by the spattered oil, they may not be able to sense the operation of the reel assembly correctly.

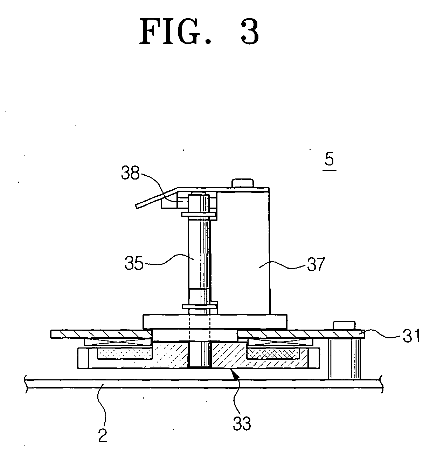

Figure 3 shows an example of the capstan motor assembly 5 of Figure 1.

Referring to Figure 3, the capstan motor assembly 5 comprises a motor frame 31 disposed at above the main deck 2, a driving portion 33 disposed at a lower part of the motor frame 31, a rotatable shaft 35, protruding upwards from the motor frame 31, and a holder 37 for rotatably supporting the shaft 35. A pinch roller presses the magnetic tape against the shaft 35 when the capstan is required to drive the tape. The shaft 35 is supported on the holder 37 by a metal bearing 38.

The capstan motor assembly 5 as described above also requires oil to be applied on the metal bearing 38 for lubrication. However, in case of an excessive oil application, the oil may run down on the shaft 35 and be spattered during the high-speed rotation of the shaft 35, contaminating the exterior of the holder 37. Moreover, the oil on the exterior of the holder 37 may also contaminate the magnetic tape running around the shaft 35. For example, when the tension of the magnetic tape is reduced, e.g. when the tape is stopped, the magnetic tape becomes loose and can come into contact with the holder 37. As a result, the magnetic tape can become contaminated by the oil present on the holder.

As described above, oil is required to be applied to rotary bodies disposed on the deck of a tape recorder. However, a problem is created when the oil is transferred to the surrounding parts or is spattered by the rotation of the rotary body and thus contaminates the surrounding parts. Accordingly, a need exists for an apparatus to prevent oil on a rotary body in such applications from being spattered and contaminating surrounding parts.

A tape deck according to the present invention is characterised in that the shaft is provided with an oil barrier means for controlling the movement of lubricating oil applied to the shaft for restricting the transfer of said oil to other elements.

The shaft may be rotary or static. There may be both static and rotary shafts and optionally a plurality of either kind.

In the case of a static shaft, a rotary element is rotatably mounted on the shaft. The shaft may comprise a finger and the barrier means may comprise an annular channel formed circumferentially in the finger. The shaft may comprise a foot having a surface from which a finger projects, and the barrier means may comprise a circular channel about the finger in said surface. The channel in said surface may be a V-section channel having a radially inner wall that is substantially parallel to the axis of the finger.

In the case of a rotary shaft, the barrier means may comprise a flange projecting radially outward from the shaft. There may be a surface having a channel arranged to receive oil thrown from said flange during rotation thereof.

An embodiment of the present invention will now be described, by way of example, with reference to Figures 4, 5 and 6 of the accompanying drawings, in which:
Figure 1 is a plan view of a moving deck of a conventional tape recorder;
Figure 2 is a sectional view showing the reel assembly of Figure 1;
Figure 3 is a partial sectional view showing the capstan motor assembly of Figure 1;
Figure 4 is a sectional view showing a reel assembly according to the present invention;
Figure 5 is an exploded perspective view of a capstan assembly and a main deck according to the present invention; and
Figure 6 is a partial sectional view showing the capstan motor assembly of Figure 5.

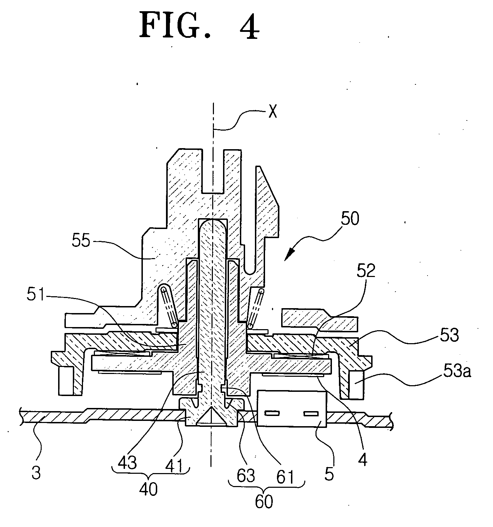

Referring to Figure 4, a reel assembly comprises a shaft 40, fixed to a sub deck 3, a reel assembly 50 rotatably disposed on the shaft 40 and an oil spattering prevention means 60.

The shaft 40 comprises a stationary foot portion 41, fixed in the sub deck 3, and a finger 43, extending from and integrally formed with the foot portion 41. The foot portion 41 is press-fitted into a hole in the sub deck 3. The finger 43 is thinner than the foot portion 41, that is, the shaft body 43 has an outer diameter smaller than that of the stationary portion 41. The reel assembly 50 is rotatably mounted on the finger 43.

The reel assembly 50 comprises a lower reel 51 rotatably supported on the shaft body 43, a reel gear 53 supported by the lower gear 51 via a clutch 52, and an upper reel 55 connected to and rotating together with the lower reel 51.

For smooth rotation of the reel assembly 50, oil is applied between the lower reel 51 and the shaft body 43. The reel gear 53 is rotated by the power transmitted from a capstan motor assembly 5 and has gear teeth 53a formed on its outer circumference. The clutch 52 between the reel gear 53 and the lower reel 51 may be comprised of a plate spring or a friction member.

The upper reel 55 is fixed to the lower reel 51 and rotates together with the lower reel 51, and, in use, has a tape reel of the tape cassette seated thereon. The lower reel 51 is provided with a sensible portion 71, such as a reflective member, on the lower surface, and the sub deck 3 has a sensor 73 disposed thereon for detecting the sensing portion 71, thereby detecting rotation of the reel assembly 50.

The oil spattering prevention means 60 is provided to prevent the oil applied between the shaft body 43 and the reel assembly 50 from being spattered when the reel assembly 50 rotates. The oil spattering prevention means 60 comprises a circumferential recess 61 formed around the finger 43 and/or an annular recess 63 formed in the upper surface of the stationary portion 41 around the base of the finger 43. The circumferential recess 61 is formed around the lower end of the shaft body 43. The circumferential recess 61 is recessed from the outer circumference of the shaft body 43 in a perpendicular relation with respect to the axial direction of the shaft body 43. Specifically, the circumferential recess includes a first and second wall formed in a substantially perpendicular relation with respect to an axial direction of the shaft body and a third, or bottom wall, formed in a substantially parallel relation with respect to an axial direction of the shaft body. The oil running down on the shaft body 43 therefore is received in the circumferential recess 61 and prevented from running down further and is thereby prevented from being spattered outward.

The annular recess 63 is ring-shape around the base of the finger 43 on the upper surface of the foot portion 41. Specifically, the annular recess includes first and second walls formed at an angle, wherein at least one wall is in a substantially parallel relation with respect to an axial direction of the finger. Preferably, the annular recess 63 is formed on the boundary line where the foot portion 41 and the finger 43 meet and effectively receives oil running down on the shaft body 43.

Accordingly, oil running down the finger 43 is firstly received by the circumferential recess 61 and prevented from running down the finger any further. Furthermore, oil which is not trapped by the circumferential recess 61 is received by the annular recess 63 and therefore oil is not spattered by rotation of the reel assembly 50. Moreover, by preventing the oil from being spattered, the surrounding parts can be prevented from being contaminated and, in particular, the sensible portion 71 and the sensor 73 can be prevented from being contaminated and therefore malfunctioning.

Additional circumferential recesses may be added to the circumferential recess 61, or as a shaft body having a plurality of circumferential recesses 61. Likewise, the shaft body can also be provided with additional annular recesses.

The shaft and the oil spattering prevention apparatus employing the same according to an embodiment of the present invention described above can be used to effectively prevent oil present between the shaft and the reel assembly from running down and being spattered by the rotation of the reel assembly. Accordingly, the parts around the reel assembly can be prevented from being contaminated and therefore the product quality can be improved.

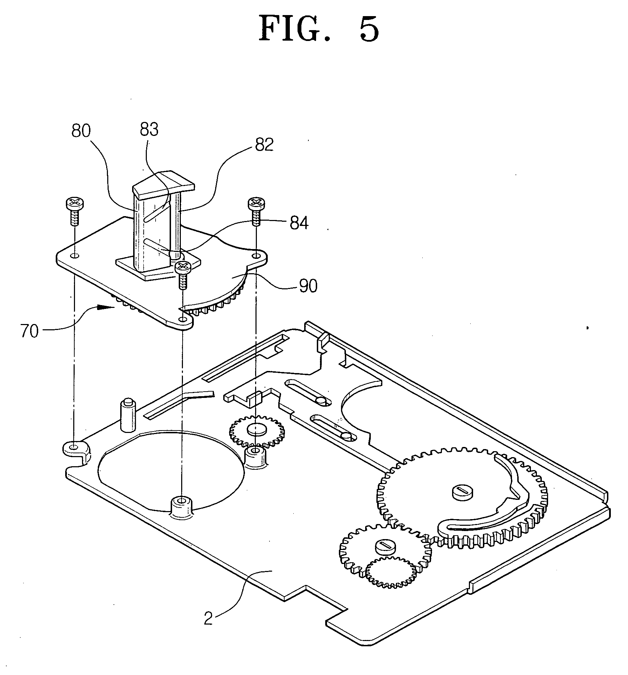

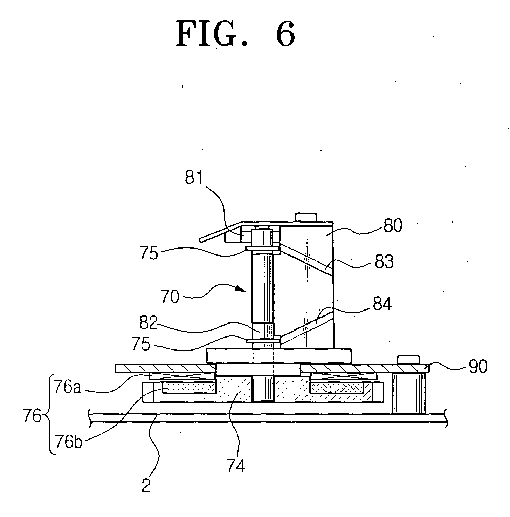

Referring to Figures 5 and 6, the capstan assembly of a tape recorder according to the present invention comprises a capstan motor assembly 70 disposed on a main deck 2, a holder 80 disposed on an upper part of the main deck 2 to support a shaft 82 of the capstan motor assembly 70 and an oil guide portion provided in the holder 80.

The capstan motor assembly 70 comprises a shaft 82 uprightly disposed on a motor frame 90, which is disposed at above the main deck 2, and a driving portion 76 for rotatably driving the shaft 82. The driving portion 76 has a stator 76a supported on a lower part of the motor frame 90 and a rotor 76b, corresponding to the stator 76a. The rotor 76b supports a driving gear 74 and is rotatably disposed at the lower end of the shaft 82. The shaft 82 rotates at a high speed when driven by the driving portion 76 for driving the magnetic tape in record and playback modes. A pinch roller presses the tape against the shaft 82 in the manner described above with reference to the prior art.

The holder 80 is disposed on the motor frame 90 to support the shaft 82. The shaft 82 is rotatably supported by a metal bearing 81 between the shaft 82 and the holder 80. Oil is applied to the metal bearing 81 for lubrication as described above with reference to Figure 3.

The shaft 82 is provided with respective flanges 75 at its upper and lower ends thereof, to prevent the transfer of oil. The flanges 75 protrude from the outer circumference of the shaft 82 to prevent the oil from being transferred from the ends to the centre portion of the shaft 82.

The holder 80 is provided with the oil guide portions. The oil guide portions prevent the oil from running down the outer surface of the holder 80 when excess oil, which has been applied to the shaft 82, is spattered from the flanges 75. The oil guide portions includes a first oil recess 83 and a second oil recess 84 which are formed in an exterior surface of the holder 80.

The first and the second oil recesses 83, 84 are respectively formed in an upper part and a lower part of the holder 80 in a symmetrical manner. The first and the second oil recesses 83, 84 each extend from points adjacent to respective flanges 75 on the shaft side of the holder 80 opposes the shaft 82. Also, the first and the second oil recesses 83, 84 are inclined upwardly and downwardly respectively and terminate at a point near an edge of the exterior surface of the holder 80 directed away from the shaft 82. The oil recesses 83, 84 receive any oil spattered during the rotation of the shaft 82 and prevent the oil from running down and contaminating the outer surface of the holder 80. Accordingly, when the magnetic tape contacts the holder 80 either when running or when stopped, the magnetic tape is not contaminated by the oil.

The present teaching can be readily applied to other types of apparatus. Many alternatives, modifications and variations will be apparent to those skilled in the art.

## Claims

1. A tape deck having a shaft (40; 70), **characterised in that** the shaft (40; 70) is provided with an oil barrier means (60; 75) for controlling the movement of lubricating oil applied to the shaft (40; 70) for restricting the transfer of said oil to other elements.

2. A tape deck according to claim 1, including a further shaft (40; 70) provided with oil barrier means (60; 75), wherein one shaft (40) is static with a rotary element (51) rotatably mounted thereon and the other (70) is rotary.

3. A tape deck according to claim 2, wherein the static shaft (40) comprises a finger (43) and the barrier means (60) comprises an annular channel (61) formed circumferentially in the finger (43).

4. A tape deck according to claim 2 or 3, wherein the static shaft (40) comprises a foot (41) having a surface from which a finger (43) projects, and the barrier means (60) comprises a circular channel (63) about the finger (43) in said surface.

5. A tape deck according to claim 4, wherein the channel (63) in said surface is a V-section channel having a radially inner wall that is substantially parallel to the axis of the finger (43).

6. A tape deck according to any one of claims 2 to 5, wherein the barrier means (75) provided to the rotary shaft comprises a flange (75) projecting radially outward from the rotary shaft (70).

7. A tape deck according to claim 6, including a surface (80) having a channel (83, 84) arranged to receive oil thrown from said flange (75) during rotation thereof.

8. A tape deck according to claim 1, wherein the shaft (40) is static and a rotary element (51) is rotatably mounted on the shaft (40).

9. A tape deck according to claim 8, wherein the shaft (40) comprises a finger (43) and the barrier means (60) comprises an annular channel (61) formed circumferentially in the finger (43).

10. A tape deck according to claim 8 or 9, wherein the shaft (40) comprises a foot (41) having a surface from which a finger (43) projects, and the barrier means (60) comprise a circular channel (63) about the finger (43) in said surface.

11. A tape deck according to claim 10, wherein the channel (63) in said surface is a V-section channel having a radially inner wall that is substantially parallel to the axis of the finger (43).

12. A tape deck according to claim 1, wherein the shaft (70) is rotary.

13. A tape deck according to claim 12, wherein the barrier means (75) comprises a flange projecting radially outward from the shaft (70).

14. A tape deck according to claim 13, including a surface (80) having a channel (83, 84) arranged to receive oil thrown from said flange (75) during rotation thereof.

15. A shaft comprising:
a stationary portion fixed to a deck;
a shaft body extended in a diameter smaller than that of the stationary portion, the shaft body having at least one rotary body that is rotatably supported on an outer circumference of said shaft body; and
an oil spattering prevention means for preventing oil applied between the shaft body and the rotary body from being spattered when the shaft body rotates.

16. The shaft according to claim 15, wherein the oil spattering prevention means comprises a circumferential recess formed on an outer circumference of the shaft body and having a predetermined depth for receiving oil running down on the shaft body.

17. The shaft according to claim 16, wherein the circumferential recess is formed in a perpendicular relation with respect to an axial direction of the shaft body.

18. The shaft according to claim 15, wherein the oil spattering prevention means comprises an annular recess formed on an upper surface of the stationary portion for receiving oil running down on the shaft body.

19. The shaft according to claim 16, wherein the oil spattering prevention means further comprises an annular recess formed on an upper surface of the stationary portion for receiving oil running down on the shaft body.

20. The shaft according to claim 17, wherein the annular recess is formed on a boundary between the shaft body and the stationary portion.

21. An oil spattering prevention apparatus for a tape recorder, comprising:
a shaft fixed to a sub deck, wherein the sub deck slides on a main deck;
a reel assembly rotatably disposed on the shaft and having a tape reel of a tape cassette, wherein said tape reel is driven by a capstan motor of the main deck; and
an oil spattering prevention means for preventing oil applied between the shaft body and the reel assembly from being spattered due to rotation of the reel assembly.

22. The oil spattering prevention apparatus according to claim 21, wherein the oil spattering prevention means comprises one or more recesses formed on an exterior of the shaft for receiving oil running down on the shaft.

23. The oil spattering prevention apparatus according to the claim 21, wherein the shaft comprises:
a stationary portion fixed on the sub deck; and
a shaft body extended from the stationary portion and having a diameter smaller than that of the stationary portion, the shaft body rotatably supporting the reel assembly, wherein the oil spattering prevention means comprises a recess formed on at least one of the shaft body and the stationary portion.

24. The oil spattering prevention apparatus according to claim 23, wherein the recess comprises:
a circumferential recess formed on an outer circumference of the shaft body; and
an annular recess formed in a ring shape on an upper surface of the stationary portion.

25. The oil spattering prevention apparatus according to claim 24, wherein the circumferential recess is formed in a perpendicular relation with respect to an axial direction of the shaft body.

26. The oil spattering prevention apparatus according to claim 24, wherein the circumferential recess is comprised of a first and second wall formed in a substantially perpendicular relation with respect to an axial direction of the shaft body and a third wall formed in a substantially parallel relation with respect to an axial direction of the shaft body.

27. The oil spattering prevention apparatus according to claim 24, wherein the annular recess is comprised of a first and second wall formed at an angle, wherein at least one wall is in a substantially parallel relation with respect to an axial direction of the shaft body.

28. The oil spattering prevention apparatus according to claim 21, wherein the shaft is disposed adjacent to a holder that rotatably supports the shaft, wherein the oil spattering prevention means comprises one or more recesses formed in the holder for receiving oil running down on the holder body.

29. The oil spattering prevention apparatus according to claim 28, wherein at least one of the one or more recesses is disposed proximally to the top of the shaft and is angled downward.

30. The oil spattering prevention apparatus according to claim 28, wherein at least one of the one or more recesses is disposed proximally to the bottom of the shaft and is angled upward.

31. The oil spattering prevention apparatus according to claim 21, wherein the shaft includes at least one flange to prevent oil from running down on the shaft.
